# EUROPEAN PATENT SPECIFICATION

(11) **EP 0 450 310 B1**
(45) Date of publication and mention of the grant of the patent: **07.07.1993**
(21) Application number: 91103069.0
(22) Date of filing: 01.03.1991
(51) Int. Cl.: A23L 1/16

(54) **Rice pasta**
Reisteigware
Pâte alimentaire à base de riz

(30) Priority: 03.04.1990 US 503808
(43) Date of publication of application: 09.10.1991
(73) Proprietor: SOCIETE DES PRODUITS NESTLE S.A., 1800 Vevey (CH)
(72) Inventor: Hsu, Jau Yann, Brookfield, CT 06804 (US); Wedral, Elaine Regina, Sherman, CT 06784 (US)

(56) References cited:
- EP-A- 0 081 077

## Description

The present invention relates to a process for the preparation of a rice pasta.

There are a variety of conventional methods used for the production of rice pasta. The following are examples:
1. A slurry of rice or rice and starch containing from 50-80% moisture is steamed to gelatinise the rice starch then cut into a pasta shape. However, this process is cumbersome, energy consuming and expensive.
2. A mixture of rice flour and water is extruded into a pasta shape.
3. A mixture of rice flour and water with wheat flour added is extruded into a pasta shape.
4. A mixture of rice flour and boiled rice is extruded into a pasta shape.
5. A mixture of rice flour and water is formed into a pasta shape by extrusion cooking to give a gelatinised pasta.
6. A mixture of uncooked rice flour, pre-cooked rice flour, alginate gums and water are extruded into a pasta shape as described in United States Patent No. 4435435.

The disadvantage of extruding a rice pasta mix directly into a pasta shape is that the rice pasta has poor strength with low cooked firmness and high cooking loss. The disadvantage of gelatinised pastas is that large amounts of energy are required for cooking and drying.

Conventional rice pastas may be dehydrated products containing from 3 to 12% moisture or may be wet fresh products containing from 40 to 80% moisture.

We have found that by extruding or sheeting a rice pasta mix having a maximum moisture content of 40% into a rice dough sheet followed by predrying and cutting into a pasta shape, we can obtain a pasta having greater strength and a better eating quality than a pasta formed directly by extruding the pasta mix. In addition, the cooking quality may be improved i.e. cooking loss and cooking time may be reduced and the texture may be improved.

According to the present invention there is provided a process for the preparation of a rice pasta which comprises extruding or sheeting into a dough sheet a pasta mix comprising uncooked rice flour and precooked rice flour and having a maximum moisture content of 40%, followed by predrying and cutting into a pasta shape.

The moisture content of the pasta mix is preferably from 30% to 40%.

The amount of precooked rice flour present in the pasta mix is preferably from 5% to 40%, and especially from 10% to 25% by weight based on the weight of uncooked rice flour.

The pasta mix preferably contains, in addition, one or more further ingredients e.g. an edible oil, egg white, glyceryl monostearate, and alginate gums such as sodium alginate, potassium alginate or propylene glycol alginate. The edible oil may be, for instance, any vegetable oil conventionally used in pasta formulations to prevent sticking e.g. olive oil, corn oil or soybean oil. The amount of each of these further ingredients may be from 0.5 to 5%, preferably from 1% to 4% by weight based on the weight of the uncooked rice flour.

Preferably, the rice dough sheet is steamed to give a partially pre-cooked rice dough sheet before predrying. The gelatinisation range after steaming is usually from 30 to 95% and preferably from 70 to 90%. The steaming is conveniently carried out in a steam tunnel saturated with steam at a temperature from 85°C to 98°C over a period of from 20 seconds to 5 minutes, preferably from 30 seconds to 4 minutes depending on the thickness of the rice dough sheet.

In one method of predrying, the rice dough sheet may be partially dried to a moisture content of from 20 to 35%, preferably from 25 to 30% and then cut into a pasta shape to give a wet fresh pasta. Alternatively the rice dough sheet may be dried to a moisture content of from 15 to 30%, preferably from 20 to 25%, cut into a pasta shape and then dried again to a moisture content of from 3 to 12% to give a dehydrated pasta.

Partial drying of the dough sheet to a moisture content down to 15% may conveniently be carried out by passing the dough sheet through a hot air tunnel at a temperature of from 70°C to 90°C, preferably from 75°C to 85°C for a period of from about 15 to 90 seconds, preferably from 30 to 60 seconds. The drying of the pasta shapes to a moisture content of from 3 to 12% may be carried out in a hot air dryer at a temperature of 90° to 120°C, preferably from 95° to 110°C over a period of from 15 to 45 minutes, preferably from 20 to 35 minutes.

The present invention also provides a wet, fresh rice pasta having a moisture content of from 20 to 35% by weight based on the total weight of the pasta.

The wet fresh rice pastas prepared by the process of this invention having a moisture content of from 20 to 35% have excellent storage stability under refrigerated conditions e.g. up to 60 days. They may be packaged in modified atmospheric condition e.g. 85% N₂ and 15% CO₂.

The present invention further provides a dehydrated rice pasta containing from 3 to 12% by weight moisture whenever prepared by the process of this invention as hereinbefore described. These dehydrated rice pastas have good dehydration/rehydration qualities as well as a good appearance. They may have a storage stability of a year or even larger at room temperature.

The following Examples further illustrate the present invention.

### Example 1

3075 g rice flour (Riviana's RL-200) and 370 g pre-cooked rice flour (Riviana's L-200) were mixed with 110 g egg white powder (Henningsen's P-11), 20 g sodium alginate (Kelco's Kelcogel HV) and 20 g propylene glycol alginate (Kelco's Kelcoloid HVF) until uniform. 1295 g water were then added gradually to the mixture while mixing was conducted for 10 min, followed by the addition of 110 g corn oil and mixing for another 10 min. This dough mixture was then extruded into a dough sheet of 0.14 cm thickness and 10 cm width in a regular pasta extruder. The extruded dough sheets were then passed through a saturated steam tunnel at 87°-98°C temperature and steamed for 3 minutes. The steamed dough sheets were then passed through a hot air tunnel at 75°-80°C for 40 seconds to a moisture content of from 25-30%. Pasteurisation takes place during steaming and during drying. The dough sheets were then slitted and cut into fettuccine (0.6 cm width), noodle (0.3 cm width) or linguine & angel hair shapes (0.15 cm width or even more narrow). These pastas were packaged in containers with modified atmospheric condition (85% N₂ and 15% Co₂) and had keeping quality of up to 60 days at 4°C. These wet rice noodles could be cooked in boiling water from 1 to 4 minutes depending on the width.

Testing of each ingredient and processing step used in this rice pasta composition and process showed pre-cooked rice flour functioned as a binder and under extruding condition, it helped to form a strong rice dough sheet. The oil prevented the sticking of dough to the inside parts of the extruder and made it possible to extrude the rice dough sheet that contained pre-cooked rice flour and alginate gums. Cooking tests showed the use of both egg white and alginate gums improved the cooking quality and texture.

The pasteurised, wet rice noodle with 25-30% moisture content produced by this process was different from conventional wet rice noodle with 40-80% moisture in several aspects; firstly, it was not completely pre-cooked, yet it still had the same advantage of short cooking time; secondly because of lower moisture content and modified atmospheric packaging, it had a longer shelf life at refrigerated temperature; thirdly, because of lower moisture content, it had the advantage of lower bulk volume.

### Example 2

The procedure of Example 1 was followed up to the stage where the dough sheets were cut into pasta shapes. These pasta shapes were then further dried in a hot air dryer (without humidity control) at a temperature of 100°C for 25 minutes to a moisture content of 5%. They had a keeping quality of at least one year at room temperature.

The dehydrated rice pasta had good cooking quality and could be cooked for 3 to 6 minutes depending on the width. Because of the steaming step, the egg white and the alginate gums used, it had a cooking quality and texture equal to or better than the conventional dry rice noodle but, because it was only partially cooked, it consumed less energy in production than the conventional product.

## Claims

1. A process for the preparation of a rice pasta which comprises extruding or sheeting into a dough sheet a pasta mix comprising uncooked rice flour and precooked rice flour and having a maximum moisture content of 40%, followed by predrying and cutting into a pasta shape.

2. A process according to claim 1 wherein the moisture content of the pasta mix is from 30% to 40%.

3. A process according to claim 1 wherein the amount of precooked rice flour present in the pasta mix is from 5% to 40% by weight based on the weight of uncooked rice flour.

4. A process according to claim 1 wherein the pasta mix contains one or more of an edible oil, egg white or an alginate gum.

5. A process according to claim 4 wherein each of the edible oil, egg white and alginate gum is present in the pasta mix in an amount of from 0.5 to 5% by weight based on the weight of the uncooked rice flour.

6. A process according to claim 1 wherein the dough sheet is steamed before predrying to give a partially precooked rice dough sheet.

7. A process according to claim 1 wherein the dough sheet is predried to a moisture content of from 20% to 35% and then cut into a pasta shape to give a wet fresh rice pasta.

8. A process according to claim 1 wherein the dough sheet is dried to a moisture content of from 15% to 30%, cut into a pasta shape and then dried again to a moisture content of from 3% to 12% to give a dehydrated pasta.

## Patentansprüche

1. Verfahren zur Herstellung von Reisteigwaren, welches das Strangpressen eines Teigwarengemisches oder das Ausrollen eines solchen zu einer Teigbahn umfaßt, wobei dieses Teigwarengemisch ungekochtes Reismehl und vorgekochtes Reismehl enthält und einen maximalen Feuchtigkeitsgehalt von 40 % aufweist, wonach der extrudierte oder ausgerollte Teig vorgetrocknet und zu Teigwarenformen zerschnitten wird.

2. Verfahren nach Anspruch 1, wobei der Feuchtigkeitsgehalt des Teigwarengemisches 30 % bis 40 % beträgt.

3. Verfahren nach Anspruch 1, wobei die Menge des in dem Teigwarengemisch vorhandenen, vorgekochten Reismehles 5 Gew.-% bis 40 Gew.-%, bezogen auf das Gewicht des ungekochten Reismehles, beträgt.

4. Verfahren nach Anspruch 1, wobei das Teigwarengemisch eine oder mehrere der Komponenten enthält, welche aus einem Speiseöl, Eiweiß oder einem Alginatgummi ausgewählt sind.

5. Verfahren nach Anspruch 4, wobei jede der aus einem Speiseöl, Eiweiß und Alginatgummi ausgewählten Komponenten in dem Teigwarengemisch in einer Menge von 0, 5 Gew.-% bis 5 Gew.-%, bezogen auf das Gewicht des ungekochten Reismehles, vorliegt.

6. Verfahren nach Anspruch 1, wobei die Teigbahn vor dem Vortrocknen gedämpft wird, um eine teilweise vorgekochte Reisteigbahn zu ergeben.

7. Verfahren nach Anspruch 1, wobei die Teigbahn auf einen Feuchtigkeitsgehalt von 20 % bis 35 % vorgetrocknet und dann zu einer Teigwarenform zerschnitten wird, um nasse, frische Reisteigwaren zu ergeben.

8. Verfahren nach Anspruch 1, wobei die Teigbahn auf einen Feuchtigkeitsgehalt von 15 % bis 30 % getrocknet, zu einer Teigwarenform zerschnitten und dann wieder auf einen Feuchtigkeitsgehalt von 3 % bis 12 % getrocknet wird, um dehydratisierte Teigwaren zu ergeben.

## Revendications

1. Procédé de préparation de pâtes alimentaires à base de riz, qui comprend la mise sous forme d'une feuille de pâte, par extrusion ou laminage, d'un mélange pour pâtes alimentaires comprenant de la farine de riz non cuite et de la farine de riz précuite et ayant une teneur maximale en humidité de 40 %, puis un préséchage et un découpage sous forme de pâtes alimentaires.

2. Procédé suivant la revendication 1, dans lequel la teneur en humidité du mélange pour pâtes alimentaires est comprise dans l'intervalle de 30 % à 40 %.

3. Procédé suivant la revendication 1, dans lequel la quantité de farine de riz précuite présente dans le mélange pour pâtes alimentaires est comprise dans l'intervalle de 5 % à 40 % en poids sur la base du poids de farine de riz non cuite.

4. Procédé suivant la revendication 1, dans lequel le mélange pour pâtes alimentaires comprend un ou plusieurs constituants choisis entre une huile comestible, le blanc d'oeuf et un alginate.

5. Procédé suivant la revendication 4, dans lequel chacun des constituants choisis entre une huile comestible, le blanc d'oeuf et un alginate est présent dans le mélange pour pâtes alimentaires en une quantité de 0,5 à 5 % en poids sur la base du poids de la farine de riz non cuite.

6. Procédé suivant la revendication 1, dans lequel la feuille de pâte est traitée à la vapeur d'eau avant préséchage pour obtenir une feuille de pâte de riz partiellement précuite.

7. Procédé suivant la revendication 1, dans lequel la feuille de pâte est préséchée à une teneur en humidité de 20 % à 35 %, puis est découpée sous forme de pâtes alimentaires pour obtenir des pâtes alimentaires fraîches humides à base de riz.

8. Procédé suivant la revendication 1, dans lequel la feuille de pâte est séchée à une teneur en humidité de 15 % à 30 %, découpée sous forme de pâtes alimentaires, puis séchée de nouveau à une teneur en humidité de 3 % à 12 % pour obtenir des pâtes alimentaires déshydratées.
